# EUROPEAN PATENT SPECIFICATION

(11) **EP 1 832 029 B1**
(45) Date of publication and mention of the grant of the patent: **29.08.2012**
(21) Application number: 05823592.0
(22) Date of filing: 27.12.2005
(51) Int. Cl.: H04L 1/16

(54) **METHOD AND APPARATUS OF TRANSMITTING FEEDBACK INFORMATION USING AN EXTENDED SUBHEADER**
VERFAHREN UND VORRICHTUNG ZUM SENDEN VON RÜCKMELDEINFORMATIONEN UNTER VERWENDUNG EINES ERWEITERTEN SUBKOPFTEILS
PROCEDE ET APPAREIL DE TRANSMISSION D'INFORMATION DE RETROACTION PAR LE BIAIS D'UN SOUS-EN-TETE ETENDU

(30) Priority: 27.12.2004 KR 20040112927; 05.01.2005 KR 20050000930; 26.01.2005 US 647594 P; 17.03.2005 US 663347 P
(43) Date of publication of application: 12.09.2007
(60) Divisional application: 08171564.1
(73) Proprietor: LG Electronics Inc., Seoul 150-721 (KR)
(72) Inventor: IHM, Bin Chul, LG Institute, Anyang-si, Gyeonggi-do (KR); JIN, Yong Suk, LG Institute, Gyeonggi-do (KR); CHUN, Jin Young, LG Institute, Gyeonggi-do (KR)
(74) Representative: Urner, Peter
(86) International application number: PCT/KR2005/004579
(87) International publication number: WO 2006/071052

(56) References cited:
- US-B1- 6 615 382
- ANONYMOUS: "IEEE Std. 802.16-2004, IEEE Standard for Local and Metropolitan area networks; Part 16: Air Interface for Fixed Broadband Wireless Access Systems" IEEE STANDARD; IEEE, PISCATAWAY, NJ, USA, 1 October 2004 (2004-10-01), page 1,35-42,121-133,463,539-545, XP002538626
- BALACHANDRAN K ET AL: "Medium access control and radio resource management for packet data services over IS-136 channels" VEHICULAR TECHNOLOGY CONFERENCE, 1999 IEEE 49TH HOUSTON, TX, USA 16-20 MAY 1999, PISCATAWAY, NJ, USA,IEEE, US, vol. 1, 16 May 1999 (1999-05-16), pages 133-139, XP010341962 ISBN: 978-0-7803-5565-1
- BALACHANDRAN K. ET AL.: 'Medium access control and radio resource management for packet data services over IS-136 channels' IEEE 49TH VEHICULAR TECHNOLOGY CONFERENCE, 1999. CONFERENCE PROCEEDINGS ARTICLE 16 May 1999 - 20 May 1999, HOUSTON, TX, USA, pages 133 - 139, XP010341962

## Description

### Technical Field

The present invention relates to a method of transmitting feedback information, and more particularly, to a method of transmitting feedback information using an extended subheader.

### Background Art

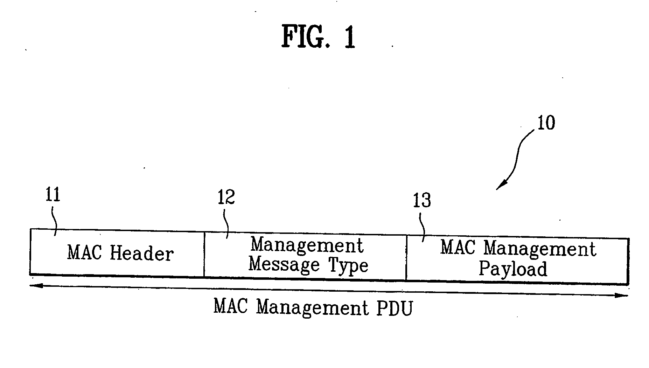

Figure 1 is an example illustrating a structure of a Medium Access Control (MAC) Protocol Data Unit (PDU). As illustrated in Figure 1, the MAC Management PDU includes a MAC Header 11, a Management Message Type 12, and a MAC Management Payload 13. Furthermore, a Bandwidth Request PDU is used by each user to dynamically request a necessary bandwidth for transmitting uplink data. The Bandwidth Request PDU is special in that it only includes the bandwidth request header and nothing else including a payload.

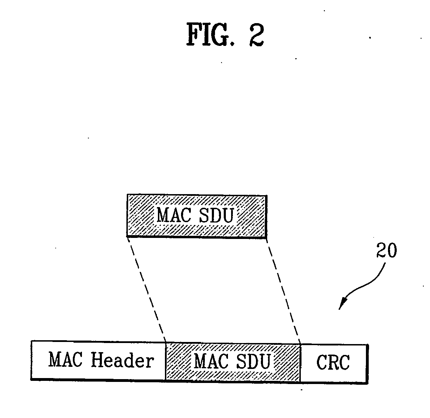

Figure 2 illustrates a structure of the MAC PDU of Figure 1. More specifically, if a MAC PDU is formed without packing or fragmenting a MAC Service Data Unit (SDU), as illustrated in Figure 2, a MAC PDU does not included a packing subheader or a fragmentation subheader.

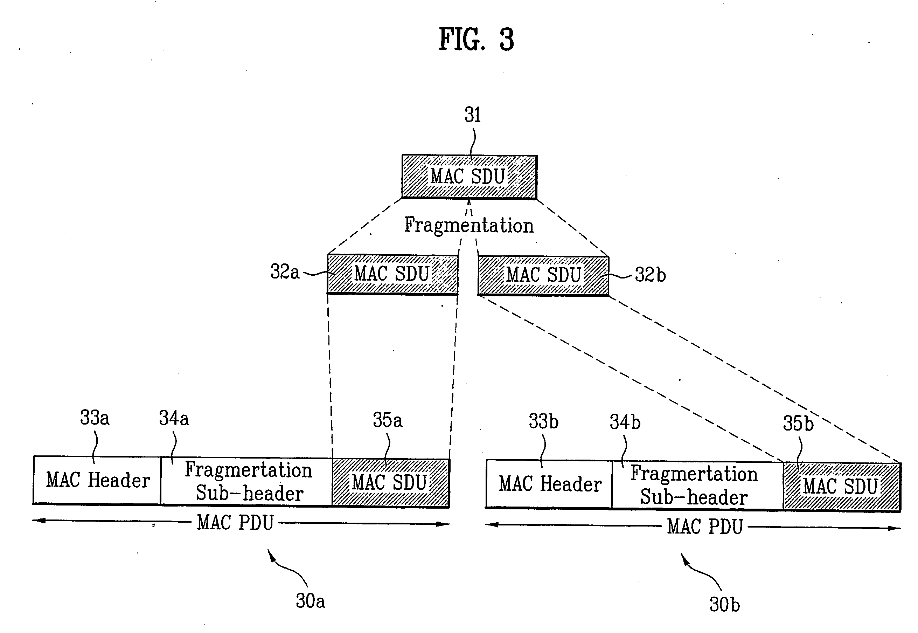

Figure 3 illustrates another example of a structure of a MAC PDU. As illustrated in Figure 3, a MAC SDU 31 is fragmented to be included in forming two or more MAC PDUs 30a and 30b. In forming the MAC PDUs 30a and 30b, fragmentation subheaders 34a and 34b are attached behind the MAC headers 33a and 33b, respectively. Moreover, MAC SDUs 35a and 35b are attached behind the fragmentation subheaders 34a and 34b, respectively, to form MAC PDUs 30a and 30b.

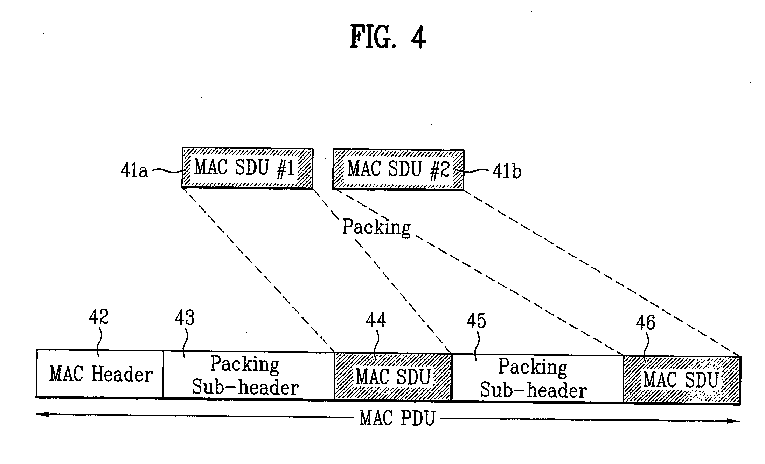

Figure 4 is yet another example illustrating a structure of a MAC PDU. In Figure 4, a MAC PDU is formed by packing two or more MAC SDUs (e.g., MAC SDU #1 41a and MAC SDU #2 41b). These MAC SDUs 44 and 46 are attached behind packing subheaders 43 and 46, respectively. Here, the MAC PDU has a MAC header 42 in front and more specifically, in front of the packing subheader 43.

As described above, when the MAC SDU is fragmented or packed, fragmentation subheader or packing subheader is attached to the respective MAC PDU(s). As such, the MAC PDU can be classified in its respective units and according to frame numbers.

In the conventional art, only the methods related to fragmenting and packing are available. In other words, the conventional art does not include a MAC PDU structure having various enhanced subheaders.

"IEEE Std. 802.16-2004, IEEE Standard for Local and Metropolitan area networks; Part 16: Air Interface for Fixed Broadband Wireless Access Systems" IEEE STANDARD; IEEE, PISCATAWAY, NJ., USA, 1 October 2004, Pages 1, 35-42, 121-133, 463, 539-545, XP002538626 describes formats of MAC PDUs, wherein each PDU includes a generic MAC header, a payload and a CRC part, wherein the MAC header could have two formats, wherein a first format is a generic MAC header indicating a MAC management message or CS data. The second format is a bandwidth request header used to request additional bandwidth.

### Disclosure of the Invention

Accordingly, the present invention is directed to a method of transmitting feedback information using an extended subheader that substantially obviates one or more problems due to limitations and disadvantages of the related art.

An object of the present invention is to provide a method of transmitting feedback information.

Another object of the present invention is to provide a method of receiving feedback information.

A further object of the present invention is to provide a system for transmitting and receiving feedback information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The object is solved by the features of the independent claims.

It is to be understood that both the foregoing general description and the following detailed description of the present invention are exemplary and explanatory and are intended to provide further explanation of the invention as claimed.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings;
FIG. 1 s an example illustrating a structure of a Medium Access Control (MAC) Protocol Data Unit (PDU);
FIG. 2 illustrates a structure of the MAC PDU of Figure 1;
FIG. 3 illustrates another example of a structure of a MAC PDU;
FIG. 4 is yet another example illustrating a structure of a MAC PDU;
FIG. 5 illustrates an example of a MAC header;
FIG. 6 is another example illustrating a MAC header;
FIG. 7 depicts an example of a MAC PDU;
FIG. 8 is a diagram depicting a structure of an extended subheader group; and
FIG. 9 is an example of an Extended Subheader Format (ESF).

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

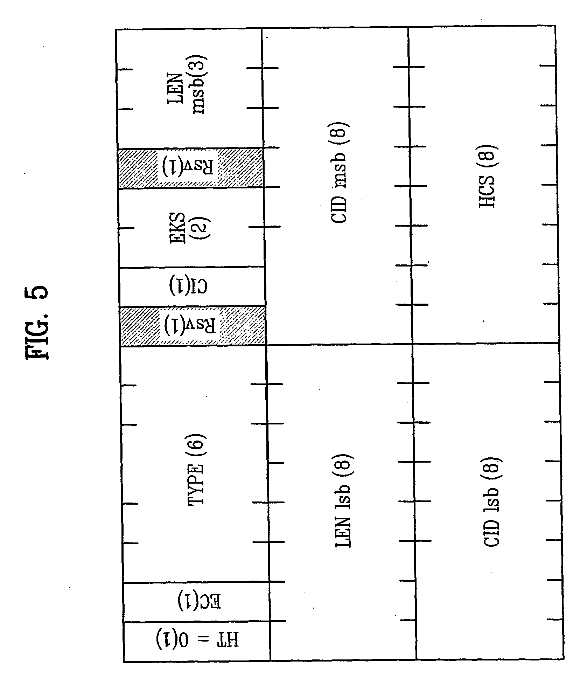

Figure 5 illustrates an example of a MAC header. As illustrated in Figure 5, the MAC header includes a 'type' field represented by 6 bits. Moreover, the 'type' field can express six (6) different types of subheaders depending on the bitmap type. These different types of subheaders can be attached behind the MAC header, and a specific type of the subheader can be indicated in the 'type' field. This type field indicates six (6) types of subheaders, and each subheader has a size of 2 bytes.

Table 1 shows an example of six (6) types of subheaders.

**[Table 1]**

| **Type bit** | **Value** |
|---|---|
| #5 Most Significant | Mesh subheader |
| Bit (MSB) | 1=present, 0=absent |
| #4 | ARQ Feedback Payload |
| | 1=present, 0=absent |
| #3 | Extended Type |
| | Indicates whether the present Packing or Fragmentation Subheaders, is Extended |
| | 1=Extended |
| | 0=Not Extended. Applicable to connections where |
| | ARQ is not enabled |
| #2 | Fragment subheader |
| | 1=present, 0=absent |
| #1 | Packing subheader |
| | 1=present, 0=absent |
| #0 Least Significant | Downlink:FAST-FEEDBACK Allocation subheader |
| Bit (LSB) | Uplink:Grant Management subheader |
| | 1-present, 0=absent |

As shown in Table 1, there are six types of subheaders, represented by a most significant bit (MSB) #5 to a least significant bit (LSB) #0. Each type of subheader can be indicated as being present or as being absent. More specifically, the type bit of '1' or '0' indicates presence or absence of the particular subheader, respectively.

For example, if the 'type' bit #5 is indicated as '1,' the MAC PDU includes a mesh subheader. That is, in a mesh mode, each mobile station (MS) is given a Node identification (Node ID) so that each MS can be identified. To this end, the mesh subheader can be used to provide Node ID to each MS. If the 'type' bit #4 is indicated as 1, then the MAC PDU includes a subheader for an Automatic Repeat Request (ARQ). If the 'type' bit #3 is indicated as 1, then the MAC PDU includes an extended packing subheader or an extended fragmentation subheader. If the 'type' bit #2 and the 'type' bit #1 are each indicated as '1,' a packet PDU corresponding to a user are mapped to a MAC SDU payload. Moreover, a MAC PDU is formed by having a MAC header and a Cyclic Redundancy Check (CRC) attached thereto.

Lastly, an application of the bit of the 'type' bit #0 is different for an uplink transmission and for a downlink transmission. If the 'type' bit #0 is indicated as '1,' the MAC PDU includes a fast-feedback allocation subheader. Here, the fast-feedback allocation subheader is positioned at the end of all subheaders. In order to receive a feedback value from the MS, the fast-feedback allocation subheader is used to allocate resource(s) in a fast feedback channel (e.g., Channel Quality Indication Channel) and the type of feedback information.

An example of a fast-feedback allocation subheader is presented in Table 2.

**[Table 2]**

| **Syntax** | **Size** | **Notes** |
|---|---|---|
| FAST-FEEDBACK allocation Subheader { | | |
| Allocation offset | 6 bits | |
| Feedback type | 2 bits | 00 : Fast DL measurement |
| | | 01 : Fast MIMO feedback antenna#0 |
| | | 10 : Fast MIMO feedback antenna#1 |
| | | 11 : MIMO mode permutation mode feedback |
| } | | |

As depicted in Table 2, the fast-feedback allocation subheader uses an 'allocation offset' to allocate a Channel Quality Indication Channel (CQICH), which is indicated by a fast feedback channel Information Element (IE), for transmitting feedback information. Here, the allocation of CQICH can be represented in slots. In addition, a type of feedback information can be selected via the 'feedback type.' After the MS receives the fast-feedback allocation subheader, the MS can use the feedback value to request for a change to a Multi Input Multi Output (MIMO) mode or to a permutation mode.

For an uplink, if the 'type' bit #0 is indicated as '1,' the MAC PDU includes a Grant Management subheader. The Grant Management subheader is used to deliver information related to managing the uplink resources. Moreover, the use of the Grant Management subheader can vary depending on a subheader type. Based on the type of service, an allocation request for bandwidth using a piggyback request, bandwidth stealing scheme, and a polling scheme.

As illustrated in Figure 5, the MAC header includes two reserved bits, each having 1 bit length. Here, any one of the two reserved bits can be used to include information of an enhanced fast-feedback allocation subheader. In other words, a reserved bit can be used to indicate whether an enhanced fast-feedback allocation subheader is attached.

If the reserved bit is indicated as 1, the MAC header includes information of existence of the enhanced fast-feedback allocation subheader, and alternatively, if the reserved bit is indicated as '0,' the MAC header does not include any information on the enhanced fast-feedback allocation subheader.

Table 3 shows an example of an enhanced fast-feedback allocation subheader.

**[Table 3]**

| **Syntax** | **Size (bits)** | **Notes** |
|---|---|---|
| Enhanced Fast-feedback allocation subheader{ | | |
| Allocation type | 1 | 0 = Use Fast-Feedback channel |
| | | 1 = Use Feedback MAC header |
| If allocation type = 0 { | | |
| Allocation offset | 6 | Represented in slots, starting frame offset value for Fast-Feedback channel |
| CQICH_num | 4 | Number of CQICH slot(s) to be used |
| Feedback type | 3 | #0 least significant bit(LSB) ? Fast |
| | | DL |
| | | measurement |
| | | #1 - Fast MIMO feedback, antenna |
| | | #0 |
| | | #2 - Fast MIMO feedback, antenna |
| | | #1 |
| | | #3 - Fast MIMO feedback, antenna |
| | | #2 |
| | | #4 - Fast MIMO feedback, antenna |
| | | #3 |
| | | #5 - MIMO mode and Permutation mode feedback |
| | | #6 - #8 reserved |
| Frame offset | 2 | BS indicates starting frame |
| } else { | | |
| UIUC | 4 | |
| Duration | 4 | MS indicates starting frame |
| Feedback type | 4 | Refer to Table 4 |
| Frame offset | 3 | |
| } | | |

According to Table 3, the enhanced fast-feedback allocation subheader transmits a data packet to the MS. In addition, the enhanced fast-feedback allocation subheader requests for feedback on information pertaining to the transmission channel and weight value(s) of the antennas. Here, additional information can be requested such as a method of transmitting the feedback information.

In Table 3, an 'allocation type' field can be used to select a method of transmitting feedback information. For example, if the 'allocation type' field is indicated by '0,' the MS uses the fast feedback channel to transmit the feedback information. In such a case, an 'allocation offset' field is used to indicate the location of the fast feedback channel, and a 'CQICH_num' field is used to determine a number of slots to be used transmit the feedback information.

Moreover, a 'feedback type' field is used to indicate the contents of the feedback information. For example, if a BS uses two antennas, the BS can request for weight values corresponding to a first antenna and a second antenna while allocating two slots. Then the MS can send the weight value for the first antenna and the weight value for the second antenna using the allocated slots.

Furthermore, a 'frame offset' field can be used to provide information as to when the MS should send the feedback information. That is, after the MS receives the subheader, the MS can send the feedback information after a specified period or after a specified number of frames.

Alternatively, if the 'allocation type' field is indicated by '1,' the MS uses the MAC header to transmit the feedback information. Here, a 'duration' field is used to provided information regarding allocated wireless resource in the uplink, and a 'feedback type' is used to indicate the type of feedback information.

Table 4 is an example illustrating feedback information corresponding to 'feedback type' field value.

**[Table 4]**

| **Feedback Type** | **Feedback contents** | **Description** |
|---|---|---|
| 0b0000 | Set as described in table 296d | MIMO mode and permutation feedback |
| 0b0001 | DL average CQI (5bits) | 5 bits CQI feedback |
| 0b0010 | Number of index L(2bits)+MIMO coefficient (5bits. 8.4.5.4.10.6) | MIMO coefficients feedback |
| 0b0011 | Preferred-DIUC(4bits) | Preferred DL channel DIUC feedback |
| 0b0100 | UL-TX-Power(7bits) | UL transmission power |
| 0b0101 | Preferred DIUC(4bits)+UL-TX-Power(7bits)+UL-headroom(6bits) | PHY channel feedback |
| 0b0110 | Number of bands, N(2bits)+N occurrences of 'band index(6 bits) + CQI (5bits) | CQIs of multiple AMC bands |
| 0b0111 | Number of feedback types, 0(2bits)+ O occurrences of 'feedback type(4bits) + feedback content (variable)' | Multiple types of feedback |
| 0b1000-0b1111 | Reserved for future use | |

As described above, if the 'allocation type' field is indicated by '1,' the MS receives the enhanced fast-feedback allocation subheader and uses the allocated uplink wireless resources to transmit the feedback information via the MAC header.

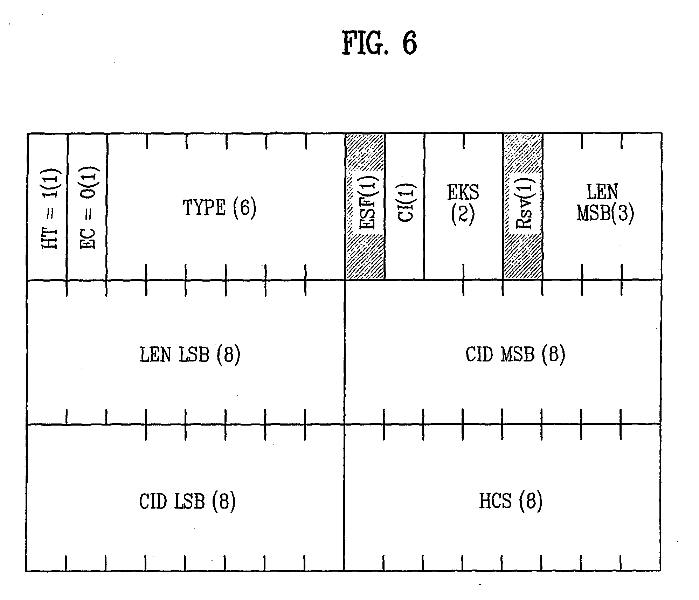

Figure 6 is another example illustrating a MAC header. As illustrated in Figure 6, the MAC header includes an Extended Subheader Format (ESF) field to further express an extended subheader group. That is, if the ESF field value is set to '1,' an extended subheader group is provided between the MAC header and six types of subheaders (immediately after the MAC header), which is expressed via a 'type' field. Hereafter, a term 'extended subheader' may be used interchangeably as a term 'extended subheader group.'

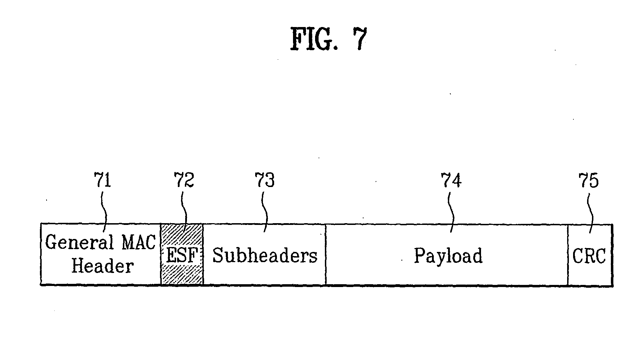

Figure 7 depicts an example of a MAC PDU. As show in this figure, the MAC PDU includes a MAC header 71, an ESF 72, subheaders 73, a payload 74, and a CRC 75. The ESF 72 can be located between the MAC header 71 and the subheaders 73, and the length of the ESF 72 can be determined based on a number of attached subheaders. Alternatively, the ESF 72 can appear or attached behind the subheaders 73.

The BS can set the value of the ESF field as '1' in the MAC header so that the MS can be notified as to the existence of the ESF between the MAC header and the subheaders. Furthermore, the ESF should not be encrypted; however, the MS can perform the error detection operation by using the CRC located at the end of the PDU.

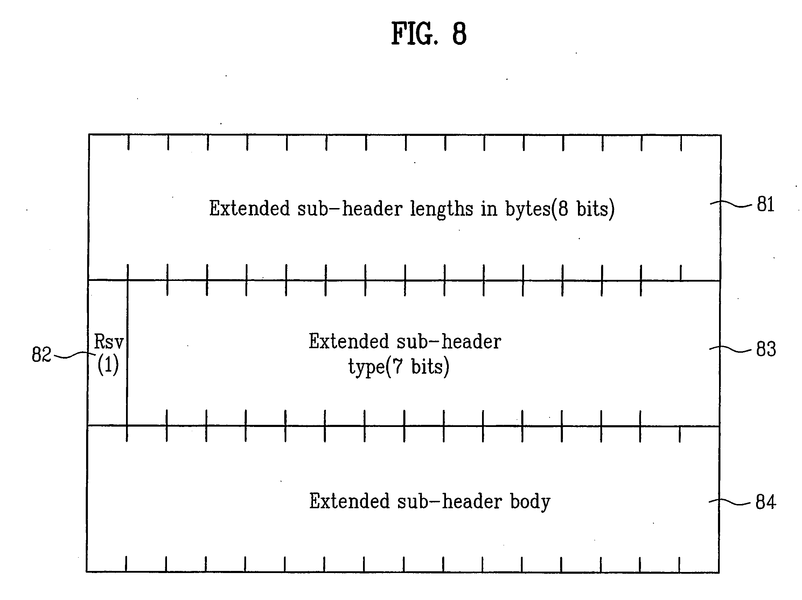

Figure 8 is a diagram depicting a structure of an extended subheader group. As depicted in Figure 8, the extended subheader group consists of an extended subheader lengths field 81 for providing a total length of the extended subheader group, a reserved bit field 82, an extended subheader type field 83, and an extended subheader body 84. Preferably, the extended subheader lengths field should be represented in 8 bits, and the total length of the extended subheader is represented in bytes. Here, the total length can be represented by maximum of 2⁷ bytes. Furthermore, there can be up to 128 types of extended subheaders.

Table 5 is an example of an extended subheader types.

**[Table 5]**

| **ESF Type value** | **Name** | **Length (bytes)** |
|---|---|---|
| 0 | New Extended subheader_1 | 1 |
| 1 | New Extended subheader_2 | 2 |
| Bits 2-127 | Reserved | |

Here, Table 5 illustrates addition of two extended subheaders. That is, based on the extended subheader type field 83, a type corresponding to '0' has an extended subheader_1 having a length of one (1) byte while a type corresponding to '1' has an extended subheader_2 having a length of two (2) bytes. Depending on the type, the extended subheader can be classified into whether the subheader is for uplink or downlink transmission. For example, a subheader used in the uplink is formed at the MS and transmitted to the BS, and if the MS receives this subheader, the MS disregards it.

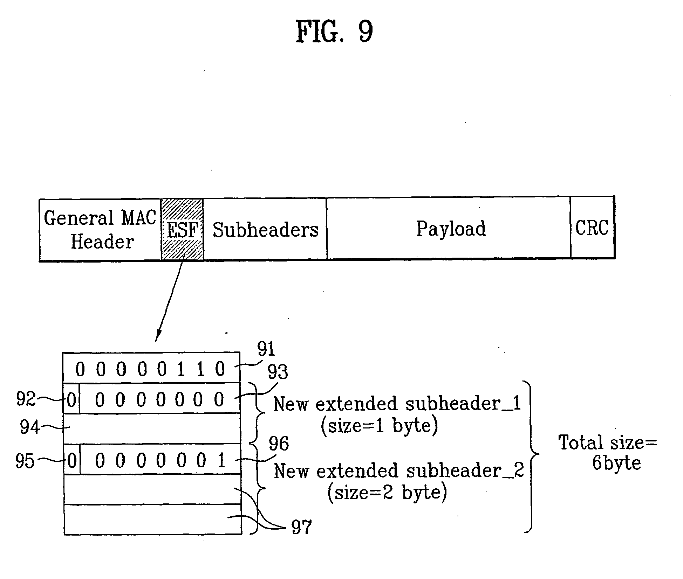

Figure 9 is an example of a format of an ESF. Here, refer to Figures 7 and 8 as well as Table 2. In Figure 9, the MAC PDU includes the extended subheader group, and an extended subheader length field 91 is used to indicate a total length of the subheader(s). In this figure, the total length of the subheaders is six (6) bytes.

In detail, a new extended subheader_1 includes a reserved bit 92 and an extended subheader type 93. Here, the extended subheader type is '0' and has a length equaling 1 byte. Moreover, a body 94 of the extended subheader contains information of a subheader represented by type '0' and having a length of 1 byte.

Furthermore, a new extended subheader_2 includes a reserved bit 95 and an extended subheader type 97. Here, the extended subheader type is '1' and has a length of 2 bytes. In a body 97 of the extended subheader_2, different from the new extended subheader_1, there are two subheaders having the length of 2 bytes.

Table 6 is an example of a downlink extended subheader attached to the MAC PDU.

**[Table 6]**

| **ESF Type value** | **Name** | **Length** |
|---|---|---|
| 0 | SDU_SN Extended subheader | 1 |
| 1 | DL Sleep control Extended subheader | 3 |
| 2 | Feedback request Extended subheader | 3 |
| 3 | PDU SN(short) Extended subheader | 1 |
| 4 | PDU SN(long) Extended subheader | 2 |
| Bits#5-127 | Reserved | |

As shown in Table 6, at least one subheader is attached to the MAC PDU before being transmitted. For example, if the ESF type field indicates a value of '00000010,' a feedback request extended subheader, having a length of 3 bits, is attached to the MAC PDU.

Table 7 is another example of an uplink extended subheader group attached to the MAC PDU.

**[Table 7]**

| **ESF Type value** | **Name** | **Length** |
|---|---|---|
| 0 | MIMO mode feedback Extended subheader | 1 |
| 1 | UL Tx power report Extended subheader | 1 |
| 2 | Mini-Feedback report Extended subheader | 2 |
| 3 | PDU SN(short) Extended Extended subheader | 1 |
| 4 | PDU SN(long) Extended subheader | 2 |
| Bits#5-127 | Reserved | |

As shown in Table 7, at least one subheader is attached to the MAC PDU before being transmitted. For example, if there is a request for MIMO mode change, a MIMO mode feedback extended subheader is transmitted after a desired mode is selected.

Table 8 is an example of a feedback request extended subheader format from an uplink extended subheader.

**[Table 8]**

| **Name** | **Size (bits)** | **Description** |
|---|---|---|
| UIUC | 4 | |
| Feedback type | 4 | Refer to Table 4 |
| OFDMA Symbol offset | 6 | The offset is relevance to the Allocation Start Time field given in the UL-MAP message. |
| Subchannel offset | 6 | The lowest index subchannel used for carrying the burst, starting from Subchannel 0. |
| No. slot | 3 | The number of slots allocated for the burst |
| Frame offset(F) | 1 | Indicate to start reporting at the frame. If F==0, the allocation applies to the UL subframe two frames ahead of the current frame. If F==1, for frames ahead of the current frame. |

As depicted in Table 8, a feedback request extended subheader format can be 3 bytes in length. If the feedback request extended subheader format is transmitted to the MS, the MS transmits feedback information according to the contents of the feedback request extended subheader using the allocated uplink wireless resource. In addition, an 'OFDMA symbol offset' field and a 'subchannel offset' field provide a location of the uplink resource for feedback information. Moreover, a 'No. slot' field indicates a number of slots allocated for the burst or a number slots to be used from a designated location. Here, a method of encoding for the feedback information is determined using an Uplink Interval Usage Code (UIUC). Lastly, a 'frame offset' field provides a starting frame for transmitting feedback information, where the starting frame is a frame at which the feedback information is to be begin transmitting.

### Industrial applicability

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A method of receiving an extended subheader, the method comprising:
receiving, by a mobile station, hereinafter referred to as MS, from a base station, hereinafter referred to as BS, a Protocol Data Unit, hereinafter referred to as PDU, including a Medium Access Channel, hereinafter referred to as MAC, header, wherein the MAC header including a type field indicating which subheaders are attached to the PDU and an Extended Subheader Format, hereinafter referred to as ESF, field indicating whether an extended subheader group is present;
determining, by the MS, whether the extended subheader group is present in the PDU from the ESF field, wherein the extended subheader group appears immediately after the MAC header and before the subheaders when the extended subheader is determined to be present;
identifying a feedback request extended subheader from the extended subheader group; and
transmitting feedback information in response to the feedback request extended subheader.

2. A method of transmitting an extended subheader, the method comprising:
forming, at a base station, hereinafter referred to as BS, a Protocol Data Unit, hereinafter referred to as PDU, including a Medium Access Channel, hereinafter referred to as MAC, header, wherein the MAC header includes a type field indicating which subheaders are attached to the PDU and an Extended Subheader Format, hereinafter referred to as ESF, field indicating whether an extended subheader group is present;
transmitting the PDU comprising the MAC header, at least one of the subheaders which is indicated by the type field, and the extended subheader group when the ESF field indicates the extended subheader is present, wherein the extended subheader group comprises a feedback request extended subheader, and wherein the extended subheader group appears immediately after the MAC header and before the subheaders; and
receiving a feedback information in response to the feedback request extended subheader.

3. The method of claims 1 or 2, wherein the extended subheader group further includes at least one of an Service Data Unit Sequence Number, hereinafter referred to as SDU_SN, extended subheader, a Down Link, hereinafter referred to as DL, sleep control extended subheader, Sequence Number, hereinafter referred to as SN, request extended subheader, a Protocol Data Unit Sequence Number, hereinafter referred to as PDU SN, short extended subheader, and a PDU SN long extended subheader.

4. The method of claims 1 or 2, wherein the type field indicates fast-feedback allocation subheader is attached to the PDU and the fast-feedback allocation subheader includes an allocation offset field indicating a channel quality indication channel and a feedback type field indicating a type of feedback information.

5. The method of any one claims 1 to 4, wherein a size of the ESF field is 1 bit and a size of the type field is 6 bits.

6. The method of any one claims 1 to 5, wherein the extended subheader group includes an extended subheader group length field, at least one extended subheader type field, and at least one extended subheader body field.

7. The method of claim 6, wherein the extended subheader group length field indicates a total length of the extended subheader group, the at least one extended subheader type field indicates various types of extended subheaders and a length of a corresponding extended subheader, and the at least one extended subheader body field includes contents of each of the extended subheaders.

8. The method of claim 7, wherein a size of the at least one extended subheader body field depends on the contents of the extended subheader.

9. The method of any one claims 1 to 8, wherein the feedback request extended subheader includes a feedback type field, frame offset field, subchannel offset field, an Orthogonal Frequency Division Multiplexing Access, hereinafter referred to as OFDMA, symbol offset field, an Uplink Interval Usage Code, hereinafter referred to as UIUC, field, and a number of slots field, and
wherein the frame offset field indicates a starting frame for transmitting feedback information, the starting frame is a frame at which the feedback information is to be transmitted.

10. The method of claim 9, wherein the feedback type field includes at least one of downlink average carrier to interference and noise ratio, hereinafter referred to as CINR, and preferred Downlink Interval Usage Code, hereinafter referred to as DIUC.

11. An apparatus for transmitting and receiving an extended subheader, the apparatus configured for:
forming a Protocol Data Unit, hereinafter referred to as PDU, including a Medium Access Channel, hereinafter referred to as MAC, header, wherein the MAC header includes a type field indicating which subheaders are attached to the PDU and an Extended Subheader Format, hereinafter referred to as ESF, field indicating whether an extended subheader group is present;
transmitting the PDU including the MAC header, at least one of the subheaders which is indicated by the type field, and the extended subheader group when the ESF field indicates the extended subheader is present, wherein the extended subheader group includes a feedback request extended subheader, and wherein the extended subheader group appears immediately after the MAC header and before the subheaders; and
receiving a feedback information in response to the feedback request extended subheader.

12. An apparatus for transmitting and receiving an extended subheader, the apparatus configured for:
receiving, from a base station, hereinafter referred to as BS, a Protocol Data Unit, hereinafter referred to as PDU, including a Medium Access Channel, hereinafter referred to as MAC, header, wherein the MAC header includes a type field indicating which subheaders are attached to the PDU and an Extended Subheader Format, hereinafter referred to as ESF, field indicating whether an extended subheader group is present;
determining whether the extended subheader group is present in the PDU from the ESF field, wherein the extended subheader group appears immediately after the MAC header and before the subheaders when the exteneded subheader is determined to be present;
identifying a feedback request extended subheader from the extended subheader group; and
transmitting feedback information in response to the feedback request extended subheader.

13. The apparatus of any one of claims 11 to 12, wherein the extended subheader group further includes at least one of an Service Data Unit Sequence Number, hereinafter referred to as SDU_SN, extended subheader, a Down Link, hereinafter referred to as DL, sleep control extended subheader, Sequence Number, hereinafter referred to as SN, request extended subheader, a Protocol Data Unit Sequence Number, hereinafter referred to as PDU SN, short extended subheader, and a PDU SN long extended subheader.

14. The apparatus of claim 13, wherein the extended subheader group further includes an extended subheader group length field indicating a total length of the extended subheader group, at least one extended subheader type field indicating various types of extended subheaders and a length of a corresponding extended subheader, and at least one extended subheader body field including contents of each of the extended subheaders.

15. The apparatus of claim 14, wherein a size of the extended subheader body depends on the contents of the extended subheader.

16. The apparatus of any one claims 11 to 15, wherein the feedback request extended subheader includes a feedback type field, frame offset field, subchannel offset field, an Orthogonal Frequency Division Multiplexing Access, hereinafter referred to as OFDMA, symbol offset field, an Uplink Interval Usage Code, hereinafter referred to as UIUC, field, and a number of slots field, and
wherein the frame offset field indicates a starting frame for transmitting feedback information, the starting frame is a frame at which the feedback information is to be transmitted.

17. The apparatus of claim 16, wherein the feedback type includes at least one of downlink average carrier to interference and noise ratio, hereinafter referred to as CINR, and preferred Downlink Interval Usage Code, hereinafter referred to as DIUC.

18. The apparatus of any one claims 11 to 17, wherein a size of the ESF field is 1 bit and a size of the type field is 6 bits.

19. The apparatus of any one claims 11 to 18, wherein type field indicates fast-feedback allocation subheader is attached to the PDU and the fast-feedback allocation subheader includes an allocation offset field indicating a channel quality indication channel and a feedback type field indicating a type of feedback information

## Patentansprüche

1. Verfahren zum Empfangen einer erweiterten Unterkopfzeile, wobei das Verfahren umfasst:
Empfangen durch eine Mobilstation, die im Folgenden als MS bezeichnet wird, von einer Basisstation, die im Folgenden als BS bezeichnet, einer Protokolldateneinheit, die im Folgenden als PDU bezeichnet wird, die eine Medienzugriffskanal-Kopfzeile, die im Folgenden als MAC-Kopfzeile bezeichnet wird, enthält, wobei die MAC-Kopfzeile ein Typfeld, das angibt, welche Unterkopfzeilen der PDU beigefügt sind, und ein Format-Feld der erweiterten Unterkopfzeilen, das im Folgenden als ESF-Feld bezeichnet wird, das angibt, ob eine Gruppe der erweiterten Unterkopfzeilen vorhanden ist, enthält;
Bestimmen durch die MS, ob die erweiterte Unterkopfzeilen-Gruppe in der PDU vorhanden ist, aus dem ESF-Feld, wobei die Gruppe der erweiterten Unterkopfzeilen unmittelbar nach der MAC-Kopfzeile und vor den Unterkopfzeilen erscheint, wenn bestimmt wird, dass die erweiterte Unterkopfzeile vorhanden ist;
Identifizieren einer erweiterten Rückmeldungsanforderungs-Unterkopfzeile aus der Gruppe der erweiterten Unterkopfzeilen; und
Senden der Rückmeldungsinformationen in Reaktion auf die erweiterte Rückmeldungsanforderungs-Unterkopfzeile.

2. Verfahren zum Senden einer erweiterten Unterkopfzeile, wobei das Verfahren umfasst:
Bilden in einer Basisstation, die im Folgenden als BS bezeichnet wird, einer Protokolldateneinheit, die im Folgenden als PDU bezeichnet wird, die eine Medienzugriffskanal-Kopfzeile, die im Folgenden als MAC-Kopfzeile bezeichnet wird, enthält, wobei die MAC-Kopfzeile ein Typfeld, das angibt, welche Unterkopfzeilen der PDU beigefügt sind, und ein Format-Feld der erweiterten Unterkopfzeilen, das im Folgenden als ESF-Feld bezeichnet wird, das angibt, ob eine Gruppe der erweiterten Unterkopfzeilen vorhanden ist, enthält;
Senden der PDU, die die MAC-Kopfzeile, wenigstens eine der Unterkopfzeilen, die durch das Typfeld angegeben ist, und die Gruppe der erweiterten Unterkopfzeilen, wenn das ESF-Feld angibt, dass die erweiterte Unterkopfzeile vorhanden ist, umfasst, wobei die Gruppe der erweiterten Unterkopfzeilen eine erweiterte Rückmeldungsanforderungs-Unterkopfzeile umfasst und wobei die Gruppe der erweiterten Unterkopfzeilen unmittelbar nach der MAC-Kopfzeile und vor den Unterkopfzeilen erscheint; und
Empfangen der Rückmeldungsinformationen in Reaktion auf die erweiterte Rückmeldungsanforderungs-Unterkopfzeile.

3. Verfahren nach Anspruch 1 oder 2, wobei die Gruppe der erweiterten Unterkopfzeilen ferner eine erweiterte Unterkopfzeile der laufenden Dienstdateneinheits-Nummer, die im Folgenden als erweiterte SDU_SN-Unterkopfzeile bezeichnet wird, und/oder eine erweiterte Abwärtsstrecken-Ruhesteuerungs-Unterkopfzeile, die im Folgenden als erweiterte DL-Ruhesteuerungs-Unterkopfzeile bezeichnet wird, und/oder eine erweiterte Anforderungs-Unterkopfzeile für eine laufende Nummer, die im Folgenden als eine erweiterte SN-Anforderungs-Unterkopfzeile bezeichnet wird, und/oder eine kurze erweiterte Unterkopfzeile der laufenden Protokolldateneinheits-Nummer, die im Folgenden als kurze erweiterte PDU SN-Unterkopfzeile bezeichnet wird, und/oder eine lange erweiterte PDU SN-Unterkopfzeile enthält.

4. Verfahren nach Anspruch 1 oder 2, wobei das Typfeld angibt, dass eine Zuweisungs-Unterkopfzeile für die schnelle Rückmeldung der PDU beigefügt ist, und die Zuweisungs-Unterkopfzeile für die schnelle Rückmeldung ein Zuweisungsversatzfeld, das einen Kanalqualitäts-Anzeigekanal angibt, und ein Rückmeldungstypfeld, das einen Typ der Rückmeldungsinformationen angibt, enthält.

5. Verfahren nach einem der Ansprüche 1 bis 4, wobei eine Größe des ESF-Feldes 1 Bit beträgt und eine Größe des Typfelds 6 Bits beträgt.

6. Verfahren nach einem der Ansprüche 1 bis 5, wobei die Gruppe der erweiterten Unterkopfzeilen ein Längenfeld der Gruppe der erweiterten Unterkopfzeilen, wenigstens ein Typfeld der erweiterten Unterkopfzeilen und wenigstens ein Körperfeld der erweiterten Unterkopfzeilen enthält.

7. Verfahren nach Anspruch 6, wobei das Längenfeld der Gruppe der erweiterten Unterkopfzeilen eine Gesamtlänge der Gruppe der erweiterten Unterkopfzeilen angibt, das wenigstens eine Typfeld der erweiterten Unterkopfzeilen verschiedene Typen der erweiterten Unterkopfzeilen und eine Länge einer entsprechenden erweiterten Unterkopfzeile angibt und das wenigstens eine Körperfeld der erweiterten Unterkopfzeilen die Inhalte jeder der erweiterten Unterkopfzeilen enthält.

8. Verfahren nach Anspruch 7, wobei eine Größe des wenigstens einen Körperfelds der erweiterten Unterkopfzeile von den Inhalten der erweiterten Unterkopfzeile abhängt.

9. Verfahren nach einem der Ansprüche 1 bis 8, wobei die erweiterte Rückmeldungsanforderungs-Unterkopfzeile ein Rückmeldungstypfeld, ein Rahmenversatzfeld, ein Unterkanalversatzfeld, ein Versatzfeld für ein Symbol des orthogonalen Frequenzmultiplex-Zugriffs, das im Folgenden als OFDMA-Symbol-Versatzfeld bezeichnet wird, ein Aufwärtsstrecken-Intervallverwendungscode-Feld, das im Folgenden als UIUC-Feld bezeichnet wird, und ein Feld der Anzahl der Schlitze enthält,
wobei das Rahmenversatzfeld einen Anfangsrahmen zum Senden der Rückmeldungsinformationen angibt, wobei der Anfangsrahmen ein Rahmen ist, in dem die Rückmeldungsinformationen zu senden sind.

10. Verfahren nach Anspruch 9, wobei das Rückmeldungstyp-Feld einen durchschnittlichen Abwärtsstrecken-Träger-Rauschabstand, der im Folgenden als durchschnittlicher Abwärtsstrecken-CINR bezeichnet wird, und/oder einen bevorzugten Abwärtsstrecken-Intervallverwendungscode, der im Folgenden als DIUC bezeichnet wird, enthält.

11. Vorrichtung zum Senden und Empfangen einer erweiterten Unterkopfzeile, wobei die Vorrichtung konfiguriert ist, um:
eine Protokolldateneinheit, die im Folgenden als PDU bezeichnet wird, zu bilden, die eine Medienzugriffskanal-Kopfzeile, die im Folgenden als MAC-Kopfzeile bezeichnet wird, enthält, wobei die MAC-Kopfzeile ein Typfeld, das angibt, welche Unterkopfzeilen der PDU beigefügt sind, und ein Format-Feld der erweiterten Unterkopfzeilen, das im Folgenden als ESF-Feld bezeichnet wird, das angibt, ob eine Gruppe der erweiterten Unterkopfzeilen vorhanden ist, enthält;
die PDU zu senden, die die MAC-Kopfzeile, wenigstens eine der Unterkopfzeilen, die durch das Typfeld angegeben ist, und eine Gruppe der erweiterten Unterkopfzeilen, wenn das ESF-Feld angibt, dass die erweiterte Unterkopfzeile vorhanden ist, enthält, wobei die Gruppe der erweiterten Unterkopfzeilen eine erweiterte Rückmeldungsanforderungs-Unterkopfzeile enthält und wobei die Gruppe der erweiterten Unterkopfzeilen unmittelbar nach der MAC-Kopfzeile und vor den Unterkopfzeilen erscheint; und
die Rückmeldungsinformationen in Reaktion auf die erweiterte Rückmeldungsanforderungs-Unterkopfzeile zu empfangen.

12. Vorrichtung zum Senden und Empfangen einer erweiterten Unterkopfzeile, wobei die Vorrichtung konfiguriert ist, um:
von einer Basisstation, die im Folgenden als BS bezeichnet wird, eine Protokolldateneinheit, die im Folgenden als PDU bezeichnet wird, zu empfangen, die eine Medienzugriffskanal-Kopfzeile, die im Folgenden als MAC-Kopfzeile bezeichnet wird, enthält, wobei die MAC-Kopfzeile ein Typfeld, das angibt, welche Unterkopfzeilen der PDU beigefügt sind, und ein Format-Feld der erweiterten Unterkopfzeilen, das im Folgenden als ESF-Feld bezeichnet wird, das angibt, ob eine Gruppe der erweiterten Unterkopfzeilen vorhanden ist, enthält;
aus dem ESF-Feld zu bestimmen, ob die erweiterte Unterkopfzeilen-Gruppe in der PDU vorhanden ist, wobei die Gruppe der erweiterten Unterkopfzeilen unmittelbar nach der MAC-Kopfzeile und vor den Unterkopfzeilen erscheint, wenn bestimmt wird, dass die erweiterte Unterkopfzeile vorhanden ist;
eine erweiterte Rückmeldungsanforderungs-Unterkopfzeile aus der Gruppe der erweiterten Unterkopfzeilen zu identifizieren; und
die Rückmeldungsinformationen in Reaktion auf die erweiterte Rückmeldungsanforderungs-Unterkopfzeile zu senden.

13. Vorrichtung nach einem der Ansprüche 11 bis 12, wobei die Gruppe der erweiterten Unterkopfzeilen ferner eine erweiterte Unterkopfzeile der laufenden Dienstdateneinheits-Nummer, die im Folgenden als erweiterte SDU_SN-Unterkopfzeile bezeichnet wird, und/oder eine erweiterte Abwärtsstrecken-Ruhesteuerungs-Unterkopfzeile, die im Folgenden als erweiterte DL-Ruhesteuerungs-Unterkopfzeile bezeichnet wird, und/oder eine erweiterte Anforderungs-Unterkopfzeile für eine laufende Nummer, die im Folgenden als eine erweiterte SN-Anforderungs-Unterkopfzeile bezeichnet wird, und/oder eine kurze erweiterte Unterkopfzeile der laufenden Protokolldateneinheits-Nummer, die im Folgenden als kurze erweiterte PDU SN-Unterkopfzeile bezeichnet wird, und/oder eine lange erweiterte PDU SN-Unterkopfzeile enthält.

14. Vorrichtung nach Anspruch 13, wobei die Gruppe der erweiterten Unterkopfzeilen ferner ein Längenfeld der Gruppe der erweiterten Unterkopfzeilen, das eine Gesamtlänge der Gruppe der erweiterten Unterkopfzeilen angibt, wenigstens ein Typfeld der erweiterten Unterkopfzeilen, das die verschiedenen Typen der erweiterten Unterkopfzeilen und eine Länge einer entsprechenden erweiterten Unterkopfzeile angibt, und wenigstens ein Körperfeld der erweiterten Unterkopfzeilen, das die Inhalte jeder der erweiterten Unterkopfzeilen enthält, enthält.

15. Vorrichtung nach Anspruch 14, wobei eine Größe des Körpers der erweiterten Unterkopfzeile von den Inhalten der erweiterten Unterkopfzeile abhängt.

16. Vorrichtung nach einem der Ansprüche 11 bis 15, wobei die erweiterte Rückmeldungsanforderungs-Unterkopfzeile ein Rückmeldungstypfeld, ein Rahmenversatzfeld, ein Unterkanalversatzfeld, ein Versatzfeld für ein Symbol des orthogonalen Frequenzmultiplex-Zugriffs, das im Folgenden als OFDMA-Symbol-Versatzfeld bezeichnet wird, ein Aufwärtsstrecken-Intervallverwendungscode-Feld, das im Folgenden als UIUC-Feld bezeichnet wird, und ein Feld der Anzahl der Schlitze enthält,
wobei das Rahmenversatzfeld einen Anfangsrahmen zum Senden der Rückmeldungsinformationen angibt, wobei der Anfangsrahmen ein Rahmen ist, in dem die Rückmeldungsinformationen zu senden sind.

17. Vorrichtung nach Anspruch 16, wobei das Rückmeldungstyp-Feld einen durchschnittlichen Abwärtsstrecken-Träger-Rauschabstand, der im Folgenden als durchschnittlicher Abwärtsstrecken-CINR bezeichnet wird, und/oder einen bevorzugten Abwärtsstrecken-Intervallverwendungscode, der im Folgenden als DIUC bezeichnet wird, enthält.

18. Vorrichtung nach einem der Ansprüche 11 bis 17, wobei eine Größe des ESF-Feldes 1 Bit beträgt und eine Größe des Typfelds 6 Bits beträgt.

19. Vorrichtung nach einem der Ansprüche 11 bis 18, wobei das Typfeld angibt, dass eine Zuweisungs-Unterkopfzeile für die schnelle Rückmeldung der PDU beigefügt ist, und die Zuweisungs-Unterkopfzeile für die schnelle Rückmeldung ein Zuweisungsversatzfeld, das einen Kanalqualitäts-Anzeigekanal angibt, und ein Rückmeldungstypfeld, das einen Typ der Rückmeldungsinformationen angibt, enthält.

## Revendications

1. Procédé de réception d'un sous-en-tête étendu, le procédé comprenant :
la réception, par une station mobile, MS, en provenance d'une station de base, BS, d'une unité de données de protocole, PDU, comprenant un en-tête de canal d'accès au support, MAC, dans lequel l'en-tête MAC comprend un champ de type indiquant quels sous-en-têtes sont attachés à la PDU et un champ de format de sous-en-tête étendu, ESF, indiquant si un groupe de sous-en-têtes étendus est présent ;
la détermination, par la MS, si le groupe de sous-en-têtes étendus est présent dans la PDU à partir du champ ESF, dans lequel le groupe de sous-en-têtes étendus apparaît immédiatement après l'en-tête MAC et avant les sous-en-têtes lorsqu'il est déterminé que le sous-en-tête étendu est présent ;
l'identification d'un sous-en-tête étendu de demande de rétroaction à partir du groupe de sous-en-têtes étendus ; et
la transmission d'informations de rétroaction en réponse au sous-en-tête étendu de demande de rétroaction.

2. Procédé de transmission d'un sous-en-tête étendu, le procédé comprenant :
la formation, à une station de base, BS, d'une unité de données de protocole, PDU, comprenant un en-tête de canal d'accès au support, MAC, dans lequel l'en-tête MAC comprend un champ de type indiquant quels sous-en-têtes sont attachés à la PDU et un champ de format de sous-en-tête étendu, ESF, indiquant si un groupe de sous-en-têtes étendus est présent ;
la transmission de la PDU comprenant l'en-tête MAC, au moins l'un des sous-en-têtes qui est indiqué par le champ de type, et le groupe de sous-en-têtes étendus lorsque le champ ESF indique que le sous-en-tête étendu est présent, dans lequel le groupe de sous-en-têtes étendus comprend un sous-en-tête étendu de demande de rétroaction, et dans lequel le groupe de sous-en-têtes étendus apparaît immédiatement après l'en-tête MAC et avant les sous-en-têtes ; et
la réception d'informations de rétroaction en réponse au sous-en-tête étendu de demande de rétroaction.

3. Procédé selon la revendication 1 ou 2, dans lequel le groupe de sous-en-têtes étendus comprend en outre au moins l'un d'un sous-en-tête étendu de numéro de séquence d'unité de données de service, SDU_SN, d'un sous-en-tête étendu de commande de veille de liaison descendante, DL, d'un sous-en-tête étendu de demande de numéro de séquence, SN, d'un sous-en-tête étendu abrégé de numéro de séquence d'unité de données de protocole, PDU SN, et d'un sous-en-tête étendu long PDU SN.

4. Procédé selon la revendication 1 ou 2, dans lequel le champ de type indique qu'un sous-en-tête d'allocation de rétroaction rapide est attaché à la PDU et le sous-en-tête d'allocation de rétroaction rapide comprend un champ de décalage d'allocation indiquant un canal d'indication de qualité de canal et un champ de type de rétroaction indiquant un type d'informations de rétroaction.

5. Procédé selon l'une quelconque des revendications 1 à 4, dans lequel une taille du champ ESF est 1 bit et une taille du champ de type est 6 bits.

6. Procédé selon l'une quelconque des revendications 1 à 5, dans lequel le groupe de sous-en-têtes étendus comprend un champ de longueur de groupe de sous-en-têtes étendus, au moins un champ de type de sous-en-tête étendu et au moins un champ de corps de sous-en-tête étendu.

7. Procédé selon la revendication 6, dans lequel le champ de longueur de groupe de sous-en-têtes étendus indique une longueur totale du groupe de sous-en-têtes étendus, l'au moins un champ de type de sous-en-tête étendu indique divers types de sous-en-têtes étendus et une longueur d'un sous-en-tête étendu correspondant, et l'au moins un champ de corps de sous-en-tête étendu comprend le contenu de chacun des sous-en-têtes étendus.

8. Procédé selon la revendication 7, dans lequel une taille de l'au moins un champ de corps de sous-en-tête étendu dépend du contenu du sous-en-tête étendu.

9. Procédé selon l'une quelconque des revendications 1 à 8, dans lequel le sous-en-tête étendu de demande de rétroaction comprend un champ de type de rétroaction, un champ de décalage de trame, un champ de décalage de sous-canal, un champ de décalage de symbole d'accès à multiplexage par répartition de fréquence orthogonale, OFDMA, un champ de code d'utilisation d'intervalle de liaison montante, UIUC, et un champ de nombre de tranches, et
dans lequel le champ de décalage de trame indique une trame de début pour transmettre des informations de rétroaction, la trame de début étant une trame à laquelle les informations de rétroaction doivent être transmises.

10. Procédé selon la revendication 9, dans lequel le champ de type de rétroaction comprend au moins l'un d'un rapport moyen de porteuse sur interférences et bruit de liaison descendante, CINR, et d'un code d'utilisation d'intervalle de liaison descendante, DIUC, préféré.

11. Appareil de transmission et de réception d'un sous-en-tête étendu, l'appareil étant configuré pour effectuer :
la formation d'une unité de données de protocole, PDU, comprenant un en-tête de canal d'accès au support, MAC, dans lequel l'en-tête MAC comprend un champ de type indiquant quels sous-en-têtes sont attachés à la PDU et un champ de format de sous-en-tête étendu, ESF, indiquant si un groupe de sous-en-têtes étendus est présent ;
la transmission de la PDU comprenant l'en-tête MAC, au moins l'un des sous-en-têtes qui est indiqué par le champ de type, et le groupe de sous-en-têtes étendus lorsque le champ ESF indique que le sous-en-tête étendu est présent, dans lequel le groupe de sous-en-têtes étendus comprend un sous-en-tête étendu de demande de rétroaction, et dans lequel le groupe de sous-en-têtes étendus apparaît immédiatement après l'en-tête MAC et avant les sous-en-têtes ; et
la réception d'informations de rétroaction en réponse au sous-en-tête étendu de demande de rétroaction.

12. Appareil de transmission et de réception d'un sous-en-tête étendu, l'appareil étant configuré pour effectuer :
la réception, en provenance d'une station de base, BS, d'une unité de données de protocole, PDU, comprenant un en-tête de canal d'accès au support, MAC, dans lequel l'en-tête MAC comprend un champ de type indiquant quels sous-en-têtes sont attachés à la PDU et un champ de format de sous-en-tête étendu, ESF, indiquant si un groupe de sous-en-têtes étendus est présent ;
la détermination si le groupe de sous-en-têtes étendus est présent dans la PDU à partir du champ ESF, dans lequel le groupe de sous-en-têtes étendus apparaît immédiatement après l'en-tête MAC et avant les sous-en-têtes lorsqu'il est déterminé que le sous-en-tête étendu est présent ;
l'identification d'un sous-en-tête étendu de demande de rétroaction à partir du groupe de sous-en-têtes étendus ; et
la transmission d'informations de rétroaction en réponse au sous-en-tête étendu de demande de rétroaction.

13. Appareil selon l'une quelconque des revendications 11 et 12, dans lequel le groupe de sous-en-têtes étendus comprend en outre au moins l'un d'un sous-en-tête étendu de numéro de séquence d'unité de données de service, SDU_SN, d'un sous-en-tête étendu de commande de veille de liaison descendante, DL, d'un sous-en-tête étendu de demande de numéro de séquence, SN, d'un sous-en-tête étendu abrégé de numéro de séquence d'unité de données de protocole, PDU SN, et d'un sous-en-tête étendu long PDU SN.

14. Appareil selon la revendication 13, dans lequel le groupe de sous-en-têtes étendus comprend un champ de longueur de groupe de sous-en-têtes étendus indiquant une longueur totale du groupe de sous-en-têtes étendus, au moins un champ de type de sous-en-tête étendu indiquant divers types de sous-en-têtes étendus et une longueur d'un sous-en-tête étendu correspondant, et au moins un champ de corps de sous-en-tête étendu comprenant le contenu de chacun des sous-en-têtes étendus.

15. Appareil selon la revendication 14, dans lequel une taille du corps de sous-en-tête étendu dépend du contenu du sous-en-tête étendu.

16. Appareil selon l'une quelconque des revendications 11 à 15, dans lequel le sous-en-tête étendu de demande de rétroaction comprend un champ de type de rétroaction, un champ de décalage de trame, un champ de décalage de sous-canal, un champ de décalage de symbole d'accès à multiplexage par répartition de fréquence orthogonale, OFDMA, un champ de code d'utilisation d'intervalle de liaison montante, UIUC, et un champ de nombre de tranches, et
dans lequel le champ de décalage de trame indique une trame de début pour transmettre des informations de rétroaction, la trame de début étant une trame à laquelle les informations de rétroaction doivent être transmises.

17. Appareil selon la revendication 16, dans lequel le type de rétroaction comprend au moins l'un d'un rapport moyen de porteuse sur interférences et bruit de liaison descendante, CINR, et d'un code d'utilisation d'intervalle de liaison descendante, DIUC, préféré.

18. Appareil selon l'une quelconque des revendications 11 à 17, dans lequel une taille du champ ESF est 1 bit et une taille du champ de type est 6 bits.

19. Appareil selon l'une quelconque des revendications 11 à 18, dans lequel un champ de type indique qu'un sous-en-tête d'allocation de rétroaction rapide est attaché à la PDU et le sous-en-tête d'allocation de rétroaction rapide comprend un champ de décalage d'allocation indiquant un canal d'indication de qualité de canal et un champ de type de rétroaction indiquant un type d'informations de rétroaction.
